# EUROPÄISCHE PATENTSCHRIFT

(11) **EP 0 582 043 B1**
(45) Veröffentlichungstag und Bekanntmachung des Hinweises auf die Patenterteilung: **23.09.1998**
(21) Anmeldenummer: 93107329.0
(22) Anmeldetag: 06.05.1993
(51) Int. Cl.: E04B 1/66, E04D 5/10

(54) **Wurzelfeste, bituminöse Dichtungsbahn und Verfahren zu ihrer Herstellung**
Roof blocking bituminous sealing membrane and method for its manufacture
Membrane d'étanchéité bitumineuse résistante aux racines et procédé pour sa fabrication

(30) Priorität: 04.08.1992 DE 4225666
(43) Veröffentlichungstag der Anmeldung: 09.02.1994
(73) Patentinhaber: VEDAG GmbH, 60388 Frankfurt (DE)
(72) Erfinder: Scherp, Ernst, Dipl.-Ing., 63486 Bruchköbel (DE); Schumacher, Wilfried, Dipl.-Kaufmann, 63165 Mühlheim (DE); Meinbreckse, Manfred, Dipl.-Ing., 61381 Friedrichsdorf (DE)
(74) Vertreter: Berkenfeld, Helmut, Dipl.-Ing.

(56) Entgegenhaltungen:
- EP-A- 0 059 405
- EP-A- 0 480 378
- DE-A- 2 840 599
- DE-A- 2 840 814
- DE-A- 3 918 104
- DE-U- 8 909 045
- Section Ch, Week 7419, Derwent Publications Ltd., London, GB; Class A03, & SU-A-393 390 (SURMELI ET AL) 24. Dezember 1973

## Beschreibung

Die Erfindung betrifft eine wurzelfeste, bituminöse Dichtungsbahn für die Bauwerksabdichtung z.B. für die Abdichtung von Dächern oder erdbedeckten Wänden wie die Außenflächen von Kellerwänden (siehe z.B. die nicht-vorveröffentlichte EP-A-0 570 694 vom gleichen Anmelder).

Es ist bekannt, daß eine Bauwerksabdichtung aus bituminösen Dichtungsbahnen mit einer Einlage aus gewebten oder ungewebten Fasern nicht wurzelfest ist. Aus diesem Grunde werden bituminöse Dichtungsbahnen mit einer Einlage aus 0,1 bis 0,2 mm dicken Kupferbändern als Wurzelschutzbahn eingesetzt. Zur Verbesserung der Haftung zwischen Metall und Bitumen und zur Verbesserung der Dehnbarkeit sind die Kupferbänder geriffelt oder kalottiert.

Die Dichtungsbahn wird meist als Schweißbahn angeboten. Obwohl Kupferbänder in weicher Qualität verwendet werden, ist die Schweißbahn steif und kaum flexibel. Sie ist daher nur schwer glatt ohne Lufteinschlüsse zu verlegen.

Es bestand daher die Aufgabe, eine wurzelfeste, bituminöse Dichtungsbahn mit verbesserter Flexibilität zu entwickeln.

Die Aufgabe wird neuerungsgemäß durch eine Dichtungsbahn aus einer ein- oder beidseitig mit einer bituminösen Masse beschichteten Kunststoffolie, die zumindest auf einer Oberfläche mit 0,1 bis 3 g/m² Kupfer bedampft ist, gelöst.

Als Kunststoffolie wird vorzugsweise eine Polyethylen- oder Polyesterfolie mit einer Dicke von 12 bis 60 µm verwendet. Bei dünnen Folien reicht die Formstabilität nicht aus, wenn die Dichtungsbahn in einer üblichen Dachbahnenanlage produziert wird. Aus diesem Grunde kann die Dichtungsbahn auch ein mit Bitumen imprägniertes, flächiges Fasergebilde als Trägereinlage enthalten. Je nach Verwendungsart kann es bei einer einseitig mit einer bituminösen Masse beschichteten Folie auch sinnvoll sein, auf die freie Oberfläche der Folie ein flächiges Fasergebilde als Perforationsschutz aufzukaschieren.

Die erfindungsgemäße Bahn kann in üblicherweise in einer Dachbahnenanlage produziert werden, indem beispielsweise ein Faservlies oder -gewebe mit Bitumen getränkt wird, auf die obere Seite dieser Verstärkungseinlage die mit Kupfer bedampfte Folie aufkaschiert wird und das so erhaltene Sandwich mit einer bituminösen Dachmasse beschichtet wird, deren Oberflächen mit Talkum, Sand oder Granulat abgestreut werden können. Die Deckmassen auf der Basis von Oxidations- oder Polymerbitumen können übliche wurzelhemmende Zusätze enthalten. Die Bahn kann mit Heißklebemassen verlegt werden, als Schweißbahn ausgebildet oder kaltselbstklebend ausgerüstet sein. Im letzteren Fall ist die Kleberschicht mit einer abziehbaren Trennfolie abgedeckt. Die Verstärkungseinlage kann auch aus mehreren flächigen Fasergebilden bestehen. In solchen Fällen ist die mit Kupfer bedampfte Folie vorzugsweise zwischen den Fasergebilden angeordnet. Bei Schweißbahnen beispielsweise ist es sinnvoll als unteres Fasergebilde ein Glasfaservlies zu verwenden, das als Temperaturschutz beim Aufscheißen der Bahn wirkt. Andererseits kann die erfindungsgemäße Bahn auch auf einer Foliengießanlage, wie sie etwa in der DE-A 36 41 309 beschrieben ist, gefertigt werden. Hierbei kann auf eine Fasereinlage verzichtet werden, da die Bahn im warmen Zustand bei der Produktion keinen Zugkräften ausgesetzt wird und von einem Kühlband getragen wird. Dies Verfahren eignet sich besonders für dünne Bahnen, die z.B. aus einer kaltselbstklebenden bituminösen Membran bestehen, die unterseitig mit einer abziehbaren Folie abgedeckt ist und auf die oberseitig die mit Kupfer bedampfte Kunststoffolie aufkaschiert ist, wobei die Kupferschicht nach außen weist. Hierbei wird vorzugsweise eine Polyesterfolie mit einer Dicke von etwa 20 µm verwendet, die ausreichend perforationsfest ist. Bei der Verwendung dünnerer Folien wird vorzugsweise ein Polyesterfaservlies als Perforationsschutz aufkaschiert.

Die Kunststoffolie kann ein- oder beidseitig mit Kupfer bedampft sein. Eine einseitige Bedampfung ist jedoch in der Regel ausreichend. Die erfindungsgemäßen Dichtungsbahnen haben durch die Folieneinlage einen erhöhten Wasserdampfdiffusionswiderstand gegenüber vergleichbaren Bahnen mit Vlies- oder Gewebeeinlage.

## Patentansprüche

1. Wurzelfeste, bituminöse Dichtungsbahn, **dadurch gekennzeichnet**, daß sie aus einer ein- oder beidseitig mit einer bituminösen Masse beschichteten Kunststoffolie besteht, die zumindest auf einer Oberfläche mit 0,1 bis 3 g/m² Kupfer bedampft ist.

2. Dichtungsbahn nach Anspruch 1**, dadurch gekennzeichnet**, daß sie ein oder mehrere mit Bitumen getränkte, flächige Fasergebilde enthält.

3. Dichtungsbahn nach einem der Ansprüche 1 oder 2, **dadurch gekennzeichnet**, daß die Kunststoffolie aus Polyethylen oder Polyester besteht und eine Dicke von 12 bis 60 µm hat.

4. Verfahren zur Herstellung einer Dichtungsbahn nach Anspruch 2 in einer Dachbahnenanlage, **dadurch gekennzeichnet**, daß auf das mit Bitumen getränkte, flächige Fasergebilde die mit Kupfer bedampfte Kunststoffolie aufkaschiert wird, das so erhaltene Sandwich ggf. nach Aufkaschieren eines weiteren mit Bitumen getränkten, flächigen Fasergebildet mit einer bituminösen Deckmasse beschichtet wird und die Oberflächen abgestreut bzw. mit einer Folie abgedeckt werden.

5. Verfahren zur Herstellung einer Dichtungsbahn nach einem der Ansprüche 1 bis 3 auf einer Foliengießanlage, dadurch gekennzeichnet, daß auf die bituminöse Membran die mit Kupfer bedampfte Folie und ggf. ein Polyesterfaservlies aufkaschiert werden.

## Claims

1. A root-resistant, bituminous sealing web, characterised in that it comprises a plastic foil which is coated with a bituminous material on one or both sides and which is vapour-deposited at least on one surface with from 0.1 to 3 g/m² of copper.

2. A sealing web according to claim 1 characterised in that it includes one or more flat fibre structures impregnated with bitumen.

3. A sealing web according to one of claims 1 and 2 characterised in that the plastic foil comprises polyethylene or polyester and is from 12 to 60 µm in thickness.

4. A process for the production of a sealing web according to claim 2 in a roofing web installation characterised in that the plastic foil which is vapour-deposited with copper is laminated on to the flat surface structure impregnated with bitumen, the resulting sandwich, possibly after lamination thereto of a further flat surface structure impregnated with bitumen, is coated with a bituminous covering material, and the surfaces are sprinkled or are covered with a foil.

5. A process for the production of a sealing web according to one of claims 1 to 3 on a foil casting installation characterised in that the foil which is vapour-deposited with copper and possibly a polyester fibre fleece are laminated on to the bituminous membrane.

## Revendications

1. Panneau d'étanchéité bitumineux, résistant aux racines, caractérisé par le fait qu'il se compose d'une feuille en matière synthétique revêtue sur une face ou sur les deux faces d'une masse bitumineuse, cette feuille étant vaporisée au moins sur une surface de 0,1 à 3 g/m² de cuivre.

2. Panneau d'étanchéité selon la revendication 1, caractérisé par le fait qu'il contient une ou plusieurs structures à fibres, à deux dimensions et imprégnées de bitume.

3. Panneau d'étanchéité selon l'une des revendications 1 ou 2, caractérisé par le fait que la feuille en matière synthétique se compose de polyéthylène ou de polyester et qu'elle présente une épaisseur comprise entre 12 et 60 µm.

4. Procédé de fabrication d'un panneau d'étanchéité selon la revendication 2 dans une installation de panneaux de toit, caractérisé par le fait que la feuille en matière synthétique vaporisée de cuivre est appliquée sur la structure à fibres, à deux dimension et imprégnée de bitume, que, le cas échéant après avoir appliqué une autre structure à fibres à deux dimension et imprégnée de bitume, le sandwich obtenu de cette manière est revêtu d'une masse bitumineuse de couverture et que les surfaces sont parsemées ou bien couvertes d'une feuille.

5. Procédé de fabrication d'un panneau d'étanchéité selon l'une des revendications 1 à 3 sur une installation de coulage de feuilles, caractérisé par le fait que la feuille vaporisée de cuivre et, le cas échéant, un non-tissé en polyester sont appliqués sur la membrane bitumineuse.
